## Europäisches Patentamt
## European Patent Office
## Office européen des brevets

(19)

(11) Veröffentlichungsnummer: **0 270 755 B1**

(12) **EUROPÄISCHE PATENTSCHRIFT**

(45) Veröffentlichungstag der Patentschrift: **08.01.92**

(51) Int. Cl.⁵: **C08B 30/02**

(21) Anmeldenummer: **87113805.3**

(22) Anmeldetag: **22.09.87**

(54) **Verfahren und Vorrichtung zur kontinuierlichen Quellung stärkehaltiger Rohstoffe.**

(30) Priorität: **06.12.86 DE 3641732**

(43) Veröffentlichungstag der Anmeldung:
**15.06.88 Patentblatt 88/24**

(45) Bekanntmachung des Hinweises auf die
Patenterteilung:
**08.01.92 Patentblatt 92/02**

(84) Benannte Vertragsstaaten:
**BE ES FR GB IT NL**

(56) Entgegenhaltungen:
**EP-A- 0 060 380**
**US-A- 4 106 487**

(73) Patentinhaber: **Westfalia Separator AG**
**Werner-Habig-Strasse 1 Postfach 3720**
**W-4740 Oelde 1(DE)**

(72) Erfinder: **Schürmann, Gerald, Dipl.-Ing.**
**Brahmsweg 14**
**W-4836 Herzebrock-Clarholz(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur kontinuierlichen Quellung stärkehaltiger Rohstoffe, wobei die Quellung in einem Quellmedium erfolgt und der Rohstoff und das Quellmedium an entgegengesetzten Enden einer vertikal angeordneten Quellstrecke eingespeist werden und das entstandene Quellprodukt und das freie Quellmedium jeweils an den den Einspeisungspunkten entgegengesetzten Enden der Quellstrecke abgezogen werden.

Ein derartiges Verfahren ist aus der US-A-4 106 487 bekannt. Bei diesem Verfahren besteht die Quellstrecke aus einem an der Oberseite zur Atmosphäre offenen Behälter, dem der Rohstoff drucklos zugeführt wird. Der gesamte Quellvorgang findet somit unter atmosphärischem Druck statt, und die Wasseraufnahme durch den Rohstoff geht entsprechend langsam vor sich. Das bedingt entsprechend lange Quellzeiten von bis zu 50 Stunden und damit große Speichervolumina.

Es wurde daher bereits in der DE-PS 31 10 464 ein in der Fachwelt als "Kurzzeitquellung" bekanntgewordenes Verfahren vorgeschlagen, bei dem zur Erzielung einer schnelleren Wasseraufnahme der Rohstoff einer Quellung unter einem Druck von mindestens 5 bar, bei Mais 10 - 50 bar, in einem Zeitraum von 2 - 3 Stunden unterzogen wird, bevor der mechanische Aufschluß in einer Hochdruckapparatur erfolgt. Körnermais wird nach dosiertem Zusatz von Prozeßwasser von einer Pumpe kontinuierlich einer als Rohrschlange ausgebildeten Quellstrecke zugeführt, in der unter einem Druck von 10 - 50 bar, vorzugsweise 15 bar, bei 50 - 60° C die Kurzzeitquellung erfolgt. Am Ausgang der Quellstrecke ist ein mit einem Sieb ausgerüsteter Behälter vorgesehen, wobei durch das Sieb Überschußwasser abgezogen wird, während der Mais durch Druckentspannung mittels einer Druckreduziervorrichtung zerkleinert wird.

Ein Nachteil des Verfahrens besteht darin, daß Rohstoff und Quellmedium im Gleichstrom durch die Quellstrecke geführt werden, wodurch nur eine unvollständige Extraktion von löslichen Komponenten aus dem Rohstoff möglich ist. Dadurch verbleibt stets ein hoher Anteil ggf. unerwünschter Bestandteile im Rohstoff.

Es hat sich gezeigt, daß ein derartiger Aufbau und Betrieb einer Druckquellanlage zwar für die kontinuierliche Quellung van Getreidemahlprodukten geeignet ist, jedoch für grobkörnige Rohstoffe entscheidende Nachteile aufweist.

Bei Verwendung ganzer unvermahlener Körnerfrüchte kann eine als Rohrschlange ausgebildete Quellstrecke sehr leicht durch Pfropfenbildung der Körnerfrüchte insbesondere vor Rohrbögen und Reduzierstücken verstopfen und damit einen vollständigen Verschluß des Systems bewirken, wodurch eine aufwendige manuelle Reinigung der Quellanlage erforderlich ist. Ebenso problematisch ist bei Verwendung grobkörniger Rohstoffe die vorgeschlagene Art des kontinuierlichen Austrags aus der Druckquellanlage bei gleichzeitiger Zerkleinerung des Rohstoffes. Da die Entspannung des hohen Drucks eine erhebliche Reduzierung des Austragsquerschnitts der Druckreduziervorrichtung erfordert, kann es zur partiellen oder vollständigen Verstopfung der Reduziervorrichtung kommen, womit eine spezifische Zerkleinerung des gequollenen Rohstoffes beeinträchtigt oder unmöglich ist. Außerdem kann grobkörniger Rohstoff nicht ohne einen hohen Anteil Quellmedium durch die genannte Druckreduziervorrichtung ausgetragen werden, dessen Verlust den Energieverbrauch der Anlage erhöht.

Der Eintrag des Rohstoffes mittels einer Pumpe in das Rohrsystem ist nachteilig, da neben der technologisch notwendigen Druckerhöhung die Energie für den Schub der Rohstoffe durch die Rohrschlange eingebracht werden muß und bei allen geeigneten Pumpen ein hoher verschleiß durch den druckseitig stauenden Rohstoff resultiert.

Aufgabe der Erfindung ist es, das bekannte Verfahren so zu verbessern, daß eine Steigerung des Extraktionseffektes erreicht wird und auch körniger Rohstoff problemlos verarbeitet werden kann.

Diese Aufgabe wird dadurch gelöst, daß der Rohstoff bei einer Temperatur unterhalb der Verkleisterungstemperatur der Stärke der Quellstrecke mittels einer Eintragsschleuse unter einem mechanisch erhöhten hydraulischen Druck zugeführt und das Quellprodukt mittels einer Austragsschleuse aus der Quellstrecke entnommen wird.

Das Verfahren ermöglicht somit eine Gegenstromquellung unter Druck.

Die Vorrichtung zur Durchführung des Verfahrens ist dadurch gekennzeichnet, daß die Quellstrecke als rohrförmiger, vertikal angeordneter Behälter ausgebildet ist, der an seinem oberen Ende mit einer Eintragsschleuse für den Rohstoff und einer Abzugseinrichtung für das freie Quellmedium sowie an seinem unteren Ende mit einer Austragsschleuse für das Quellprodukt und einer Zuführeinrichtung für das Quellmedium versehen ist.

Die Ausgestaltung der Vorrichtung ist besonders vorteilhaft bei der Quellung körniger Rohstoffe, die eine höhere Dichte als das Quellmedium aufweisen. Die Körner bilden in dem rohrförmigen Behälter der Vorrichtung eine lockere Packung. Trotz der Volumenzunahme des Rohstoffes besteht keine Gefahr der Pfropfenbildung im System, da durch die gleichmäßige Feststoffentnahme am Boden der Vorrichtung eine ständige Lockerung der säulenartigen Feststoffpackung gegeben ist. Der Lockerungseffekt wird unterstützt durch die entgegengerichtete Strömung des Quellmediums.

Um eine gleichmäßige Dichte und Förderung der Feststoffpackung zu gewährleisten, sollte die Höhe des Behälters mindestens das Vierfache seines Durchmessers betragen.

Bei der Verarbeitung polygonal geformter Rohstoffe oder solcher mit einem hohen Anteil an Bruch, z. B. Mais, hat sich gar ein Verhältnis 7:1 von Höhe zu Durchmesser des Behälters als notwendig für einen störungsfreien Betrieb des Systems erwiesen. Mit Vorteil bestimmt das Verhältnis von Höhe zu Durchmesser auch die bei vielen Anwendungen gewünschte Extraktion löslicher Bestandteile aus dem Rohstoff. Beim stetigen oder auch sporadischen Abzug von Quellmedium am oberen Ende des Behälters gewährleistet die gleichmäßige Verdrängung des Quellmediums innerhalb der Feststoffpackung ein hohes Konzentrationsgefälle und somit eine hohe Extraktionsrate.

Als Eintragsschleuse wird mit Vorteil eine Drehkolbenpumpe mit hoher spezifischer Förderleistung verwendet, die bei niedrigen Drehzahlen den körnigen Rohstoff schonend und mit minimalen Transportwassermengen gegen den herrschenden Druck des Quellmediums in den Behälter eingeschleust. Bei den meisten Körnerfrüchten ist bereits ein Verhältnis Rohstoff/Transportwasser von 1:1 ausreichend.

Der kontinuierliche Austrag der gequollenen Körnerfrüchte erfolgt durch die Stopfschnecken-Schleuse ohne Verlust an freiem Quellmedium, wobei der Rohstoff auf einem kurzen Förderweg zunehmend verdichtet wird. Die Verdichtung bewirkt einen Verschluß gegen den herrschenden hydraulischen Druck in dem Behälter, so daß der Rohstoff separiert vom Quellmedium ausgetragen wird.

Bewährt hat sich eine Schneckenschleuse mit zylindrischem Schneckengehäuse und einer Stopfschnecke mit steigendem Schneckenkern-Durchmesser.

Durch die gegebene Elastizität der gequollenen Körnerfrüchte bleibt bei nahezu allen Anwendungen die Kornbeanspruchung bei der Verdichtung ohne negative Auswirkung für die weitere Verarbeitung des Produktes.

Das Quellprodukt kann auf einfache Weise aus einer an der Stopfschnecken-Schleuse vorgesehenen Fangkammer mittels eines Fördermediums weitergefördert werden.

Damit beim Anfahren der Vorrichtung und während sonstiger Stillstandzeiten kein Quellmedium in die Fangkammer gelangt, ist die Fangkammer gegenüber der Stopfschnecken-Schleuse mittels eines axial verschiebbaren Kolbens absperrbar.

In einer vorteilhaften Ausführungsform ist der Eintragsschleuse ein Hydrozyklon zur dosierten Abscheidung des Rohstoffes aus einem Transportmedium vorgeschaltet. Durch den Hydrozyklon wird außerdem eine Abscheidung von unerwünschten, aufschwimmenden Fremdstoffen, wie Holzteilchen, Schmachtkorn etc., erreicht.

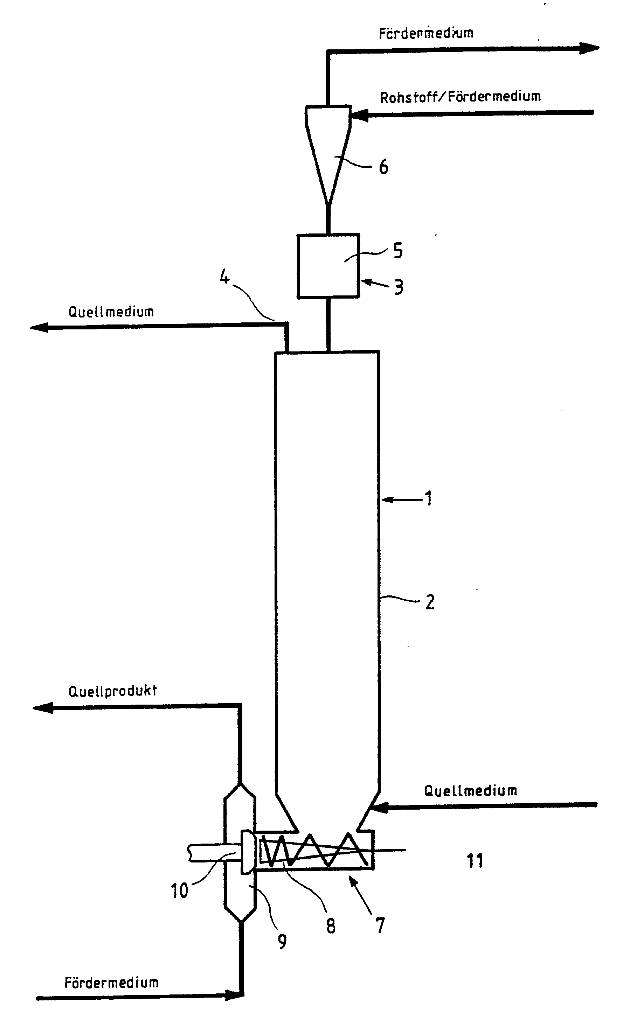

Ein Ausführungsbeispiel der Erfindung ist in der Zeichnung dargestellt und wird nachfolgend näher erläutert.

Mit 1 ist die Quellstrecke bezeichnet, die aus einem vertikal angeordneten, rohrförmigen Behälter 2 besteht. Am oberen Ende des Behälters 2 ist eine Eintragsschleuse 3 für den Rohstoff und eine Abzugseinrichtung 4 für das freie Quellmedium vorgesehen. Die Eintragsschleuse 3 ist als Drehkolbenpumpe 5 ausgebildet, der ein Hydrozyklon 6 vorgeschaltet ist. Am unteren Ende des Behälters 2 ist eine Austragsschleuse 7 für das Quellprodukt vorgesehen, die als Stopfschnecken-Schleuse 8 ausgebildet ist. Die Stopfschnecken-Schleuse 8 ist mit einer Fangkammer 9 versehen, die mittels eines axial verschiebbaren Kolbens 10 gegenüber der Stopfschnecken-Schleuse absperrbar ist. Die Zuführung des Quellmediums in den Behälter 2 erfolgt über eine an seinem unteren Ende vorgesehene Zuführeinrichtung 11.

Der sich üblicherweise im Fördermedium befindliche körnige Rohstoff gelangt zunächst in den Hydrozyklon 6, wo eine dosierte Abscheidung des Rohstoffes erfolgt, der dann über die Drehkolbenpumpe 5 in den Behälter 2 der Quellstrecke 1 gelangt. Der Behälter 2 wurde zuvor über die Zuführeinrichtung 11 mit dem unter Druck stehenden Quellmedium befüllt, wobei die Fangkammer 9 zunächst durch den Kolben 10 gegenüber der Stopfschnecken-Schleuse abgesperrt ist. Aufgrund seines größeren spezifischen Gewichtes sinkt der Rohstoff während des Quellvorganges zum unteren Ende des Behälters 2 und gelangt bis in die Stopfschnecken-Schleuse 8. Sobald die für den Rohstoff vorgesehene Quellzeit erreicht ist, wird die Stopfschnecken-Schleuse in Betrieb genommen und der Kolben 10 betätigt, so daß nunmehr das Quellprodukt selbst den Verschluß der Stopfschnecken-Schleuse 8 bewirkt. Das Quellprodukt wird gleichmäßig in die Fangkammer 9 gefördert, aus der es mittels eines Fördermediums der weiteren Verarbeitung zugeführt wird. Das Quellmedium durchströmt den Behälter 2 von unten nach oben und damit im Gegenstrom zum Rohstoff und verläßt den Behälter an seinem oberen Ende über die Abzugseinrichtung 4. Durch die Gegenstromführung wird ein optimaler Extraktionseffekt erzielt.

## Patentansprüche

1. Verfahren zur kontinuierlichen Quellung stärkehaltiger Rohstoffe, wobei die Quellung in einem Quellmedium erfolgt und der Rohstoff und das Quellmedium an entgegengesetzten Enden einer vertikal angeordneten Quellstrecke eingespeist werden und das entstandene Quellprodukt und das freie Quellmedium jeweils an den den Einspeisungspunkten entgegengesetzten Enden der Quellstrecke abgezogen werden, **dadurch gekennzeichnet,** daß der Rohstoff bei einer Temperatur unterhalb der Verkleisterungstemperatur der Stärke der Quellstrecke mittels einer Eintragsschleuse unter einem mechanisch erhöhten hydraulischen Druck zugeführt und das Quellprodukt mittels einer Austragsschleuse aus der Quellstrecke entnommen wird.

2. Vorrichtung zur Durchführung des Verfahrens nach Anspruch 1, dadurch gekennzeichnet, daß die Quellstrecke (1) als rohrförmiger, vertikal angeordneter Behälter (2) ausgebildet ist, der an seinem oberen Ende mit einer Eintragsschleuse (3) für den Rohstoff und einer Abzugseinrichtung (4) für das freie Quellmedium sowie an seinem unteren Ende mit einer Austragsschleuse (7) für das Quellprodukt und einer Zuführeinrichtung (11) für das Quellmedium versehen ist.

3. Vorrichtung nach Anspruch 2, dadurch gekennzeichnet, daß die Höhe des Behälters (2) das Vierfache seines Durchmessers beträgt.

4. Vorrichtung nach Anspruch 2, dadurch gekennzeichnet, daß die Höhe des Behälters (2) das Siebenfache seines Durchmessers beträgt.

5. Vorrichtung nach einem der Ansprüche 2 bis 4, dadurch gekennzeichnet, daß als Eintragsschleuse (3) eine Drehkolbenpumpe (5) vorgesehen ist.

6. Vorrichtung nach Anspruch 5, dadurch gekennzeichnet, daß der Drehkolbenpumpe (5) ein Hydrozyklon (6) vorgeschaltet ist.

7. Vorrichtung nach einem der Ansprüche 2 bis 6, dadurch gekennzeichnet, daß als Austragsschleuse (7) eine Stopfschneckenschleuse (8) vorgesehen ist.

8. Vorrichtung nach Anspruch 7, dadurch gekennzeichnet, daß die Stopfschneckenschleuse (8) mit einer zylindrischen Schnecke mit steigendem Schneckenkerndurchmesser ausgerüstet ist.

9. Vorrichtung nach Anspruch 7 oder 8, dadurch gekennzeichnet, daß die Stopfschneckenschleuse (8) mit einer Fangkammer (9) verbunden ist, aus der das Quellprodukt mittels eines Fördermediums transportierbar ist.

10. Vorrichtung nach Anspruch 9, dadurch gekennzeichnet, daß die Fangkammer (9) durch einen axial beweglichen Kolben (10) gegenüber der Stopfschneckenschleuse (8) absperrbar ist.

## Claims

1. Process for the continuous steeping of starch-containing materials wherein steeping is carried out in a steeping medium and the raw material and the steeping medium are fed into opposite ends of a vertical steeping section and the resulting steeped product and the free steeping medium are extracted at the ends of the steeping section opposite the ones they were introduced at, **characterized** in that the raw material is introduced into the steeping section by means of an intake sluice under a mechanically increased hydraulic pressure at a temperature below the gelatinization point of the starch and the steeped product is extracted from the steeping section by means of a removal sluice.

2. Device for executing the process as per claim 1, characterized in that the steeping section (1) takes the form of a tubular, upright tank (2) at the upper end of which is an intake sluice (3) for the raw material and a removal mechanism (4) for the free steeping medium and at the bottom of which is a removal sluice (7) for the steeped product and a feeding mechanism (11) for the steeping medium.

3. Device as in claim 2 characterized in that the height of the tank (2) is four times its diameter.

4. Device as in claim 2 characterized in that the height of the tank (2) is seven times its diameter.

5. Device as in one of the claims 2 to 4 characterized in that the intake sluice (3) comprises a rotary piston pump (5).

6. Device as in claim 5 characterized in that a hydrocyclone (6) is installed upstream of the rotary piston pump (5).

7. Device as in one of the claims 2 to 6 characterized in that the removal sluice (7) comprises a stuffing worm sluice (8).

8. Device as in claim 7 characterized in that the stuffing worm sluice (8) is equipped with a cylindrical worm with increasing scroll body diameter.

9. Device as in claim 7 or 8 characterized in that the stuffing worm sluice (8) is connected to a catch chamber (9) out of which the steeped product can be transported by means of a carrier medium.

10. Device as in claim 9 characterized in that the catch chamber (9) can be sealed off from the stuffing worm sluice (8) by means of an axially moveable piston (10).

**Revendications**

1. Procédé pour le trempage en continu de matériaux contenant de l'amidon, le trempage s'effectuant dans un milieu de trempage, la matière brute et le milieu de trempage étant alimentés aux extrémités opposés d'un trajet de trempage, le produit de trempage obtenu et le milieu de trempage libre étant soutirés des extrémités du trajet de trempage opposés aux points d'alimentation, caractérisé par le fait que la matière brute est injecté au trajet de trempage, à une température située en-dessous de la température de collage de l'amidon, au moyen d'une écluse d'entrée et que le produit de trempage est prélevé du trajet de trempage au moyen d'une écluse de sortie.

2. Dispositif permettant l'exécution du procédé selon la revendication 1, caractérisé par le fait que le trajet de trempage (1) est constitué par un récipient tubulaire vertical (2) muni d'une écluse d'entrée (3) pour la matière brute à son extrémité du haut et d'une éluse de sortie (4) pour le milieu de trempage libre, ainsi que d'un dispositif d'alimentation (11) pour le milieu de trempage.

3. Dispositif selon la revendication 2, caractérisé par le fait que la hauteur du récipient (2) s'élève à quatre fois le diamètre de celui-ci.

4. Dispositif selon la revendication 2, caractérisé par le fait que la hauteur du récipient (2) s'élève à sept fois le diamètre de celui-ci.

5. Dispositif selon l'une des revendications 2 à 4, caractérisé par le fait que l'écluse d'entrée (3) est constituée par une pompe à piston rotatif (5).

6. Dispositif selon la revendication 5, caractérisé par le fait que la pompe à piston rotatif (5) est précédée d'un hydrocyclone (6).

7. Dispositif selon l'une des revendications 2 à 6, caractérisé par le fait que l'écluse de sortie (7) est constituée par une écluse obturable à vis (8).

8. Dispositif selon la revendication 7, caractérisé par le fait que l'écluse obturable à vis (8) est équipée d'une vis cylindrique, le diamètre du corps de vis augmentant avec sa longueur.

9. Dispositif selon les revendications 7 ou 8, caractérisé par le fait que l'écluse à vis (8) est reliée à une chambre collectrice (9) de laquelle le milieu de trempage peut être véhiculé au moyen d'un milieu de transport.

10. Dispositif selon la revendication 9, caractérisé par le fait que la chambre collectrice (9) peut être obtureé envers l'écluse à vis (8) par un piston (10) coulissant axialement.